# EUROPEAN PATENT APPLICATION

(11) **EP 1 804 474 A1**
(43) Date of publication of application: **04.07.2007**
(21) Application number: 06026595.6
(22) Date of filing: 21.12.2006
(51) Int. Cl.: H04M 1/725, H04M 3/56, H04M 3/428

(54) **Cordless telephone system and method of connecting the same with interrupting caller**

(30) Priority: 28.12.2005 JP 2005380139
(71) Applicant: Brother Kogyo Kabushiki Kaisha, Nagoya-shi, Aichi-ken 467-8561 (JP)
(72) Inventor: Miyashita, Mihoko, Nagoya-shi Aichi-ken 467-8562 (JP); Takahashi, Hideaki, Nagoya-shi, Aichi-ken, 467-8562 (JP)
(74) Representative: Hofer, Dorothea

(57) **Abstract**

A cordless telephone system includes a base unit (10) having a first handset (50), a second handset (90), an interruption replying unit, and a switching unit. A first multiple-party call is implemented between a first caller on the first handset (50), a second caller on the second handset (90), and an external caller (101) on the outside line. A second multiple-party call is implemented between the first caller, the second caller, and an interrupting caller (102) on the outside line. An interruption replying unit outputs a first replying signal and a second replying signal in response to a first caller's instruction and a second caller's instruction produced when the interrupting caller calls the base unit (10) during the first multiple party call. A switching unit (31) disconnects the second handset (90) from the outside line if the first replying signal is outputted earlier than the second replying signal, and disconnect the first handset (50) from the outside line if the second replying signal is outputted earlier than the first replying signal.

## Description

### CROSS REFERENCE TO RELATED APPLICATIONS

This application claims priority from Japanese Patent Application No. 2005-380139 filed December 28, 2005. The entire content of each of these priority applications is incorporated herein by reference.

### TECHNICAL FIELD

The disclosure relates to a cordless telephone system having a function for implementing simultaneous communications (a multiparty call) among a base unit, handset, and outside line or among a plurality of handsets and an outside line; and a method of connecting to an interrupting call when an incoming call from another outside line interrupts a multiparty call.

### BACKGROUND

Cordless telephone systems having a base unit, and handsets connected to the base unit through wireless communications have been in widespread use for years. One such cordless telephone system well known in the art has a function for implementing a three-way call among the base unit, a handset, and an outside line (a party speaking on an outside line), as the example disclosed in Japanese unexamined patent application publication No. HEI-11-225187. Cordless telephone systems having a plurality of handsets may execute a three-way call among two handsets and an outside line. In addition to a three-way call function, a multiparty call function enabling four or more parties to communicate with one another simultaneously has already been implemented in cordless telephone systems.

### SUMMARY

As the cordless telephone system market has been shifting from the conventional analog systems to digital systems in recent years a gradual increase in the number of cordless telephone systems having this multiparty call function has been anticipated since the function is easier to implement on digital systems than analog systems.

These cordless telephone systems also have a function known as call waiting. If a third party on an outside line attempts to call a party on a telephone line that is busy, the telephone switchboard transmits an interrupting call signal to that telephone line, enabling the user of the telephone line to answer the incoming call and speak with the new caller while the ongoing call is temporarily put on hold. This call waiting service can also be used with cordless telephone systems having the multiparty call function described above for receiving interrupting calls from a new party on an outside line while a multiparty call is taking place.

However, conventionally if there has been an incoming call from another party on an outside line during a multiparty call such as a three-way call among a base unit, handset, and outside line, the conventional cordless telephone system temporarily places the original party on the outside line on hold when either the base unit or the handset answers the incoming call and shifts to a three-way call among the interrupting caller, the base unit, and the handset. This can be an unpleasant experience for the interrupting caller.

In other words, the interrupting caller normally expects to be connected in a two-way call with either the base unit or handset at the number dialed. However, the interrupting caller is abruptly placed in a three-way call with the base unit and handset. Hence, the interrupting caller may find the unexpected circumstances to be uncomfortable.

In view of the foregoing, it is an object of the invention to provide a cordless telephone system having a multiparty call function that avoids creating an unpleasant situation for an interrupting caller calling from an outside line to a party engaged in a multiparty call.

In order to attain the above and other objects, the invention provides a cordless telephone system including a base unit, a second handset, an interruption informing unit, an interruption replying unit, and a switching unit. The base unit has a first handset, and is connectable to an outside line. The second handset is connectable to the outside line via the base unit. A first multiple-party call is implemented between a first caller on the first handset, a second caller on the second handset, and an external caller on the outside line. A second multiple-party call is implemented between the first caller, the second caller, and an interrupting caller on the outside line. An interruption informing unit outputs an informing signal to both the first caller and the second caller when the base unit receives an interrupting signal from the outside line. The interrupting signal indicates that the interrupting caller calls the base unit during the first multiple-party call. The interruption replying unit outputs a first replying signal in response to a first caller's instruction produced in response to the informing signal, and outputs a second replying signal in response to a second caller's instruction produced in response to the informing signal. The switching unit disconnects the second handset from the outside line, resulting in implementation of a first two-way call between the first caller and the interrupting caller if the first replying signal is outputted earlier than the second replying signal, and disconnects the first handset from the outside line, resulting in implementation of a second two-way call between the second caller and the interrupting caller if the second replying signal is outputted earlier than the first replying signal.

Another aspect of the invention provides a method of connecting a cordless telephone system with an interrupting caller on an outside line during a multiple-party call. The cordless telephone system includes a base unit having a first handset and connectable to the outside line, and a second handset connectable to the outside line via the base unit. A first multiple-party call is implemented between a first caller on the base unit and a second caller on the second hand set and an external caller on the outside line. A second multiple-party call is implemented between the first caller and the second caller and the interrupting caller. The method includes a first step, a second step, and a third step. The first step outputs an informing signal to both the first caller and the second caller when the base unit receives an interrupting signal from the outside line. The interrupting signal indicates that the interrupting caller calls the base unit during the first multiple-party call. The second step outputs a first replying signal in response to a first caller's instruction produced in response to the informing signal, and outputs a second replying signal in response to a second caller's instruction produced in response to the informing signal. The third step disconnects the second handset from the outside line, resulting in implementation of a first two-way call between the first caller and the interrupting caller if the first replying signal is outputted earlier than the second replying signal, and disconnects the first handset from the outside line, resulting in implementation of a second two-way call between the second handset and the interrupting caller if the second replying signal is outputted earlier than the first replying signal.

### BRIEF DESCRIPTION OF THE DRAWINGS

Illustrative embodiments in accordance with the invention will be described in detail with reference to the following figures wherein:
Fig. 1 is a block diagram showing a telephone system according to an illustrative embodiment;
Fig. 2 is a perspective view of a base unit constituting a cordless telephone system;
Fig. 3 is a front view of a handset constituting the cordless telephone system;
Fig. 4 is a block diagram illustrating the electrical structure of the cordless telephone system;
Fig. 5 is an explanatory diagram illustrating the sequence of operations performed when an incoming call from an outside line interrupts a three-way call;
Fig. 6 is a flowchart illustrating steps in a three-way call controlling process executed by the base unit;
Fig. 7 is a flowchart illustrating steps in a two-way call process between the base unit and interrupting caller performed in S180 in the process in Fig. 6;
Fig. 8 is a flowchart illustrating steps in a two-way call process between a handset and the interrupting caller performed in S270 of the process in Fig. 6;
Fig. 9 is a flowchart illustrating steps in the two-way call process of Fig. 8 executed when arriving at a YES determination in S610 of Fig. 8; and
Fig. 10 is a flowchart illustrating steps in a handset controlling process executed by the handset.

### DETAILED DESCRIPTION

Next, a preferred embodiment of the present invention will be described while referring to the accompanying drawings.

### (1) Overall Structure of a Telephone System

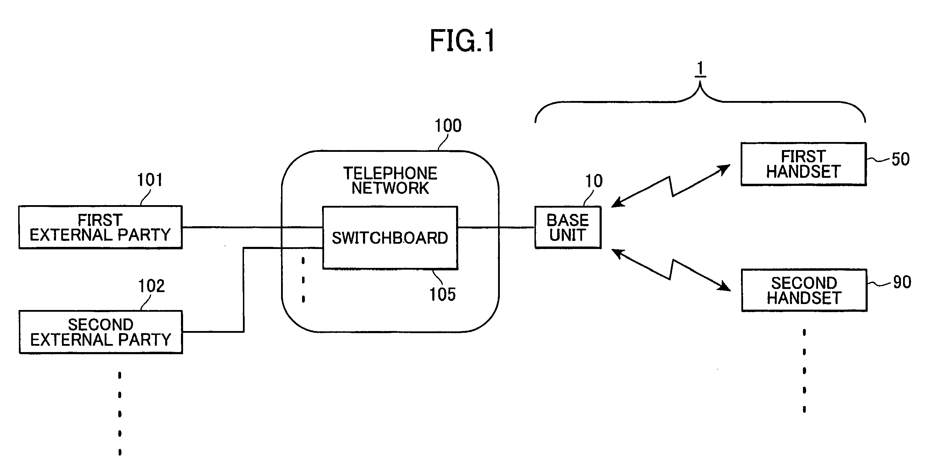

Fig. 1 is a block diagram showing the general structure of a telephone system according to the preferred embodiment. As shown in Fig. 1, the telephone system of the preferred embodiment includes a telephone network 100 (outside line) and a cordless telephone set 1 connected to the telephone network 100 from which a user can communicate with one of a plurality of external parties (a first external party 101, second external party 102, ...) via the telephone network 100. A switchboard 105 is provided in the core of the telephone network 100 for switching connections between the cordless telephone set 1 and the external parties.

The cordless telephone set 1 includes a base unit 10 directly connected to the telephone network 100, and a plurality of handsets (a first handset 50, a second handset 90, ) that can communicate wirelessly with the base unit 10. Each of the handsets 50 and 90 is connected to the telephone network 100 via the base unit 10.

The cordless telephone set 1 is also provided with a three-way calling function that enables a conversation among three parties, such as the base unit 10, one of the handsets 50 and 90, and a party on an outside line, or such as two of the handsets and a single party on an outside line.

The cordless telephone set 1 is also able to accept an incoming call from another outside line during one of the above three-way calls or during a one-on-one call with an outside party (in other words, the cordless telephone set 1 supports the existing call waiting service). Therefore, when an incoming call interrupts the user of the cordless telephone set 1 during a call with another outside line, the user can perform a prescribed operation described later to answer the incoming call, temporarily putting the ongoing call with the original external party on hold while speaking with the interrupting caller.

### (2) Structure of the Cordless Telephone Set

Next, the general structure of the base unit 10 and the handsets 50 and 90 constituting the cordless telephone set 1 will be described. In the preferred embodiment, each of the handsets 50 and 90 has an identical structure physically. Therefore, the structure of the first handset 50 (hereinafter simply referred to as the "handset 50") will be described to represent the structure of all handsets in the cordless telephone set 1.

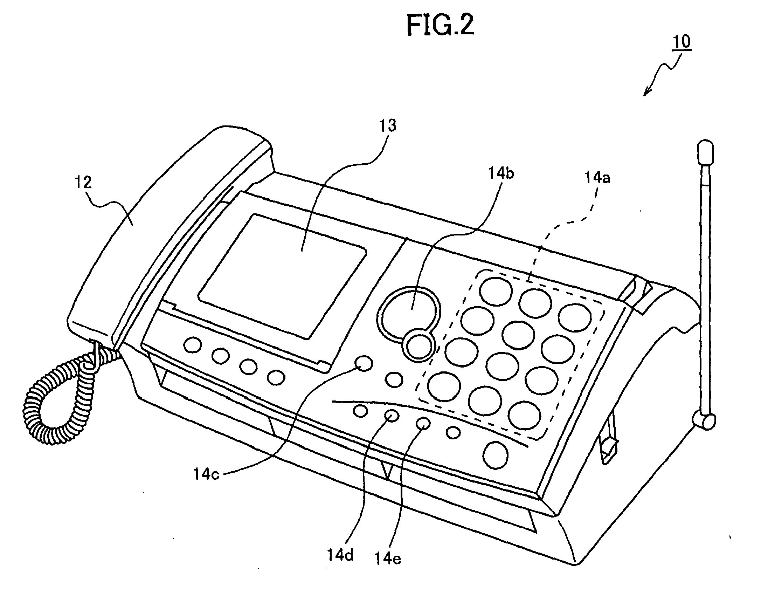

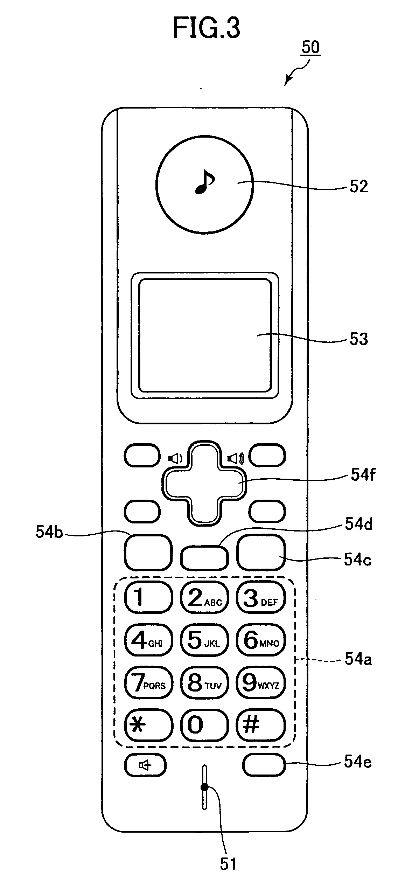

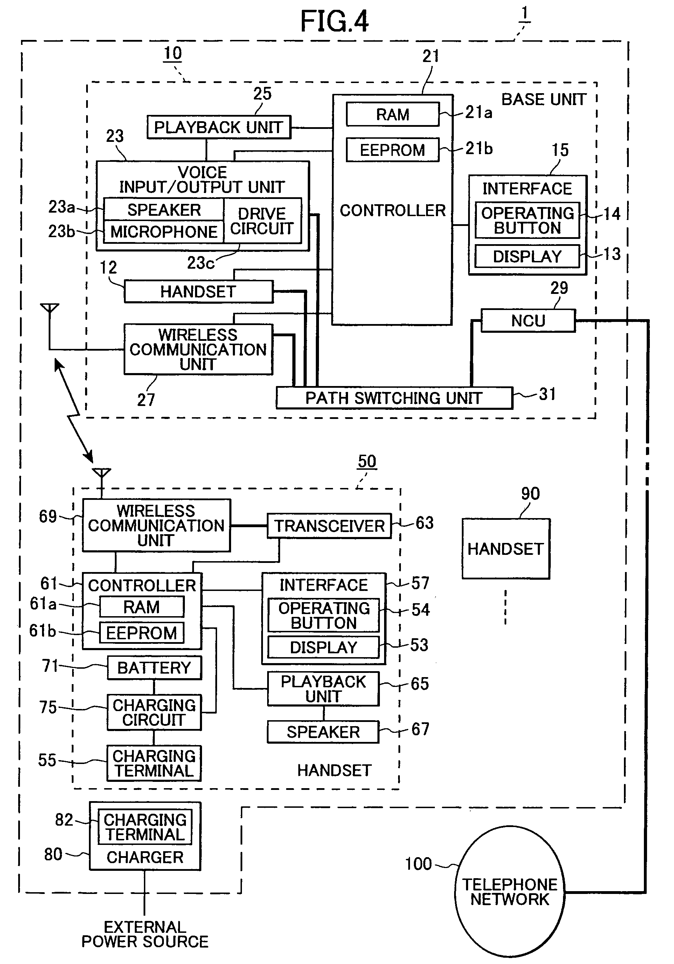

Fig. 2 is a perspective view of the base unit 10 constituting the cordless telephone set 1, and Fig. 3 is a front view of the handset 50 constituting the cordless telephone set 1. As shown in Fig. 2, a handset 12 is connected to the base unit 10 and is removed from the body of the base unit 10 when used. The base unit 10 is further provided on the top surface of the body thereof with a display 13 for displaying data related to various functions, dialing buttons 14a for inputting the telephone number of a party to call, a Select button 14b used to select items in menus and the like displayed on the display 13, a Play button 14c for playing back recorded messages of an answering machine and the like, a Hold button 14d for placing an external call on hold while playing a melody for the caller placed on hold and for performing internal calls with the handsets 50 and 90, and a Call Waiting button 14e for answering incoming calls that interrupt an ongoing external call. The buttons 14a-14e are collectively referred to as operating buttons 14 in Fig. 4. Here, the display 13 is a liquid crystal display (LCD) having a backlight in the back surface for illuminating the display surface.

As shown in Fig. 3, the handset 50 includes a mouthpiece 51 having a built-in microphone (not shown) in which the user's voice is inputted, an earpiece 52 having a built-in speaker (not shown) for outputting a ringtone, the voice of a caller at the end of the line, and the like, a display 53 for displaying data related to various functions, dialing buttons 54a for inputting the telephone number of a party to be called, an Outside Call button 54b for initiating an outside call, a Hang-up button 54c for ending a call, a Hold button 54d for placing the outside call on hold and playing a melody to the external caller and for performing an internal call with the base unit 10, a Call Waiting button 54e for answering incoming calls that interrupt an ongoing outside call and for talking on an internal line (intercom call), and a Select button 54f for selecting items in a menu and the like displayed on the display 53. The buttons 54a-54f are collectively referred to as operating buttons 54 in Fig. 4. Here, the display 53 is an LCD with a backlight for illuminating the display surface.

Next, the electrical structure of the cordless telephone set 1 will be described with reference to Fig. 4. As shown in Fig. 4, the base unit 10 further includes a controller 21 for controlling the overall operations of the base unit 10; the handset 12; a user interface 15 including the display 13 and operating buttons 14; a voice input/output unit 23; a playback unit 25 for playing back voice based on various prestored voice signals; a wireless communication unit 27 for wirelessly exchanging signals, including voice signals, between the handsets 50 and 90; a network control unit (NCU) 29 for outputting voice signals to the telephone network 100 and receiving inputted voice signals from the telephone network 100; and a path switching unit 31 for switching the transmission path for voice signals in the base unit 10.

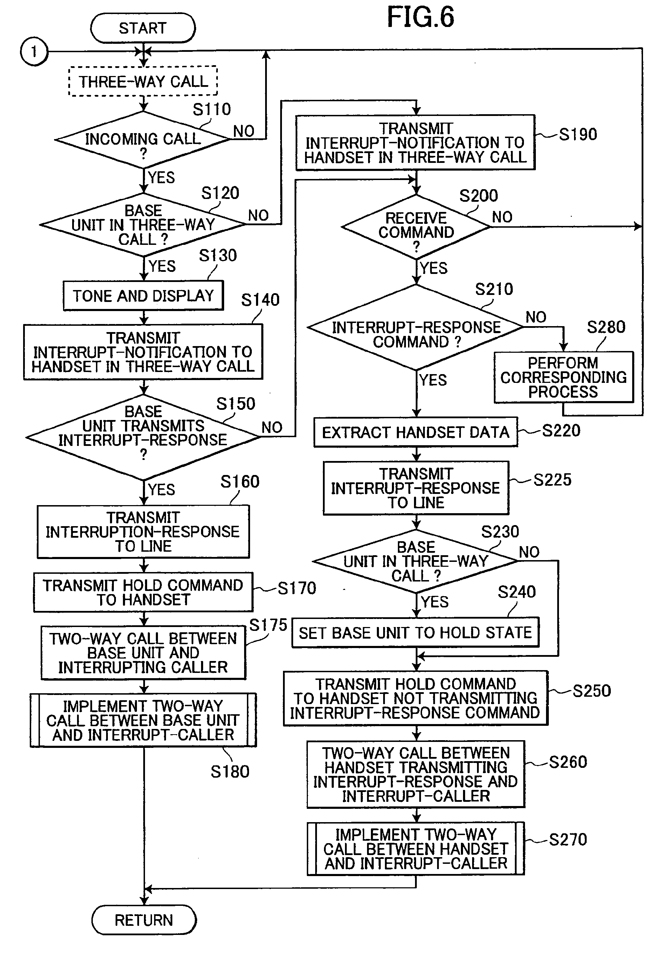

The controller 21 is provided with a RAM 21a for temporarily storing various data, and an EEPROM 21b capable of saving data stored therein without power. The EEPROM 21b stores programs for implementing various functions of the cordless telephone set 1, including processes performed during a three-way call described later (see Figs. 6-9). The EEPROM 21b is also provided with a storage area for storing a base unit telephone directory holding names and phone numbers entered on the base unit 10 side, and a storage area for storing alarm settings on the base unit 10 side.

The voice input/output unit 23 includes a speaker 23a, a microphone 23b, and a drive circuit 23c for driving the speaker 23a and microphone 23b. In addition to outputting sounds from the speaker 23a based on audio signals, the voice input/output unit 23 also implements a hands-free call using the speaker 23a and microphone 23b as the receiver and transmitter.

The playback unit 25 stores audio signals for a ringtone used when receiving an incoming call, a holding tone used when placing a call on hold, an alarm sound used for alerting the user at a preset time, and the like and plays back the recorded audio signals upon receiving commands from the controller 21. The audio signals are outputted to the speaker 23a or a speaker (not shown) in the handset 12 as appropriate.

When an operation is performed to initiate a call, the path switching unit 31 switches the transmission path that the base unit 10 uses to exchange audio signals externally to at least one of the handset 12, voice input/output unit 23, and wireless communication unit 27. More specifically, if the handset 12 is removed from the body of the base unit 10, the transmission path is switched to the handset 12 side. If an operation is performed to initiate a hands-free call using the operating buttons 14 of the user interface 15, the transmission path is switched to the voice input/output unit 23. If an operation is performed with the operating buttons 54 of the handset 50 to initiate a call using the handset 50, the transmission path is switched to the wireless communication unit 27.

As described above, the cordless telephone set 1 is equipped with a three-way call function. Hence, to perform a three-way call among the base unit 10, handset 50, and an external party, the path switching unit 31 establishes a transmission path between both the handset 12 and wireless communication unit 27 and the telephone network 100 side. To perform a three-way call among the two handsets 50 and 90 and an external party, the handsets 50 and 90 are connected to the base unit 10 via the wireless communication unit 27. Hence, by switching to (connecting) the wireless communication unit 27, the path switching unit 31 can establish a three-way call between the handsets 50 and 90 and the external party.

When an incoming call interrupts an ongoing external call, each unit of the cordless telephone set 1 participating in the ongoing call (at least one of the base unit 10 and the handsets 50 and 90) notifies the user of the incoming call by sounding an interrupting call tone and, in the case of the base unit 10, displaying a message on the display 13.

More specifically, a notification of the interrupting call is transmitted to the controller 21 in the base unit 10. If the base unit 10 is engaged in an external call at the time, the controller 21 outputs an interrupting call tone via the handset 12 of the base unit 10 to notify the user of the incoming call and displays a message on the display 13 indicating the incoming call. On the other hand, if the handset 50 is engaged in the external call, the controller 21 of the base unit 10 outputs an interrupt notification command to the handset 50 via the wireless communication unit 27. Upon receiving this command, the handset 50 outputs an interrupting call tone via a transceiver unit 63 described later and displays a message on the display 53. In addition to a tone signal, the interrupting call signal includes the interrupting caller's telephone number. Hence, when an interrupting call is received during an ongoing call, the telephone number of the interrupting caller is displayed on the display.

If the user of any unit constituting the cordless telephone set 1 responds to the interrupting call by operating the Call Waiting button on the unit, the path switching unit 31 outputs an interruption response pulse to the switchboard 105 of the telephone network 100 to temporarily place the current ongoing call on hold and to connect the single unit responding to the interrupting call with the interrupting caller. Further, the switchboard 105 temporarily disconnects the other unit participating in the three-way call from the outside line. Hence, the path switching unit 31 shifts the cordless telephone set 1 from a three-way call to a two-way call in which only the single unit that responded to the interrupting call can communicate with the interrupting caller, while the other units are placed on hold.

The handset 50 shown in Fig. 4 includes a controller 61 for controlling the overall operations of the handset 50; the transceiver unit 63 configured of a speaker, a microphone, and a drive circuit for driving the speaker and microphone; a user interface 57 configured of the display 53 and operating buttons 54; a playback unit 65 for playing back sounds based on various prestored audio signals; a speaker unit 67 including a speaker for outputting sounds played by the playback unit 65 and a drive circuit for driving the speaker; a wireless communication unit 69 for exchanging various signals, including audio signals, with the base unit 10 (the wireless communication unit 27) through wireless communications; a secondary battery 71 for supplying power to the entire handset 50; a charging terminal 55 for electrically connecting the handset 50 to a charging terminal 82 of a charger 80; and a charging circuit 75 for charging the battery 71 with the voltage supplied from the charger 80 via the charging terminal 55. The charger 80 is connected to an external power source and suitably converts the power supplied from the external power source before supplying power to the handset 50.

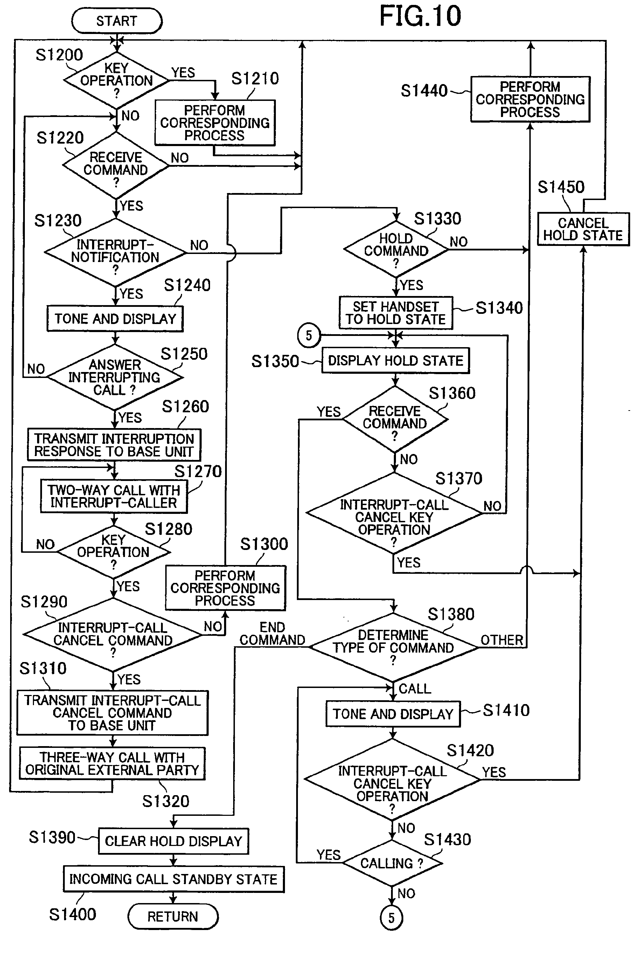

The controller 61 includes a RAM 61a for temporarily storing various data, and a EEPROM 61b that can save stored data without power. The EEPROM 61b stores programs for implementing various functions of the handset 50 including the process in Fig. 10 described later. The EEPROM 61b also includes a storage area for storing a handset telephone directory holding names and telephone numbers entered on the handset 50 side, and a storage area for storing alarm settings entered on the handset 50 side.

### (3) Transitioning from a Three-way Call to a Two-way Call

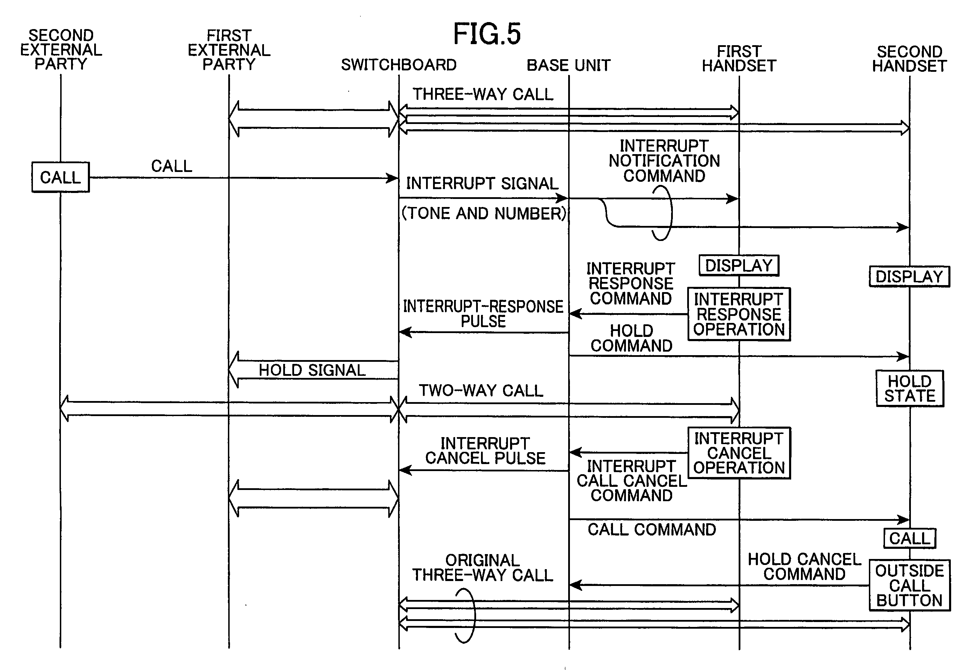

Next, example operations of the telephone system according to the preferred embodiment, and particularly the sequence of steps performed when an interrupting call is received in the middle of a three-way call will be described with reference to Fig. 5.

In the example shown in Fig. 5, a three-way call is being performed between the first handset 50 and the second handset 90 in the cordless telephone set 1 and the first external party 101. When the second external party 102 calls the cordless telephone set 1, the switchboard 105 transmits an interrupting signal to the telephone line on which the three-way call is held. The interrupting call signal includes a tone signal, as well as the telephone number for the source of the interrupting call, which in this case is the second external party 102.

When an interrupting signal is received during the three-way call, the base unit 10 transmits an interrupt notification command to the handsets 50 and 90 involved in the three-way call. As a result, the two handsets 50 and 90 involved in the three-way call output a sound indicating the interrupting call (an interrupting call tone) from a speaker built into the earpiece 52 and display the telephone number of the caller on the display 53. In this way, the users of the handsets 50 and 90 involved in the three-way call can recognize that there is another incoming call.

In the example shown in Fig. 5, when the user of the first handset 50 involved in the three-way call presses the Call Waiting button 54e to answer the interrupting call, the handset 50 transmits a response command to the base unit 10. Upon receiving this command, the base unit 10 transmits an interrupt response pulse to the telephone network 100 side, and more specifically to the switchboard 105.

Upon receiving the interrupt response pulse from the base unit 10, the switchboard 105 temporarily places the first external party 101, which has been participating in the three-way call, in a hold state and connects the second external party 102 to the cordless telephone set 1 (the first handset 50). When the first handset 50 answers the interrupting call, the base unit 10 not only transmits the interrupt response pulse to the switchboard 105, but also transmits a hold signal to the second handset 90, which did not answer the interrupting call. Consequently, the second handset 90 is placed in a hold state.

Hence, a two-way call is implemented to allow communication between only the second external party 102, which is the interrupting caller, and the first handset 50. After the telephone system has shifted into the two-way call, the second handset 90 may also participate in the call if needed. This process will be described later.

When the user of the first handset 50 subsequently presses the Call Waiting button 54e to end the call with the interrupting caller, the first handset 50 transmits an interrupting call cancel command to the base unit 10. Upon receiving this command, the base unit 10 transmits an interrupt canceling pulse to the switchboard 105 to place the first external party 101 in a hold state, and transmits a call command to the second handset 90, currently in a hold state.

At this time, a ringtone is sounded in the second handset 90 and a message indicating that the two-way call with the interrupting caller has ended is displayed on the display 53 of the second handset 90. When the user presses the Outside Call button 54b, the second handset 90 transmits a hold cancel command to the base unit 10, signaling the base unit 10 to connect the second handset 90 to the first external party 101.

As a result, the original three-way call is restored, enabling simultaneous communication among the first external party 101 and the two handsets 50 and 90.

Further, while the two-way call with the interrupting caller is in progress, other units of the cordless telephone set 1 not involved in the two-way call may communicate with each other. For example, an internal call may be made between the base unit 10 and the second handset 90 while the first handset 50 is participating in a two-way call with an external party. Alternatively, the handsets 50 and 90 may communicate through an internal call (the intercom call mentioned above) when the base unit 10 is engaged in a two-way call with an external party.

In the preferred embodiment, the "hold state" for the base unit 10, first handset 50, or second handset 90 signifies a state in which units in the hold state cannot initiate a new call on an outside line since another unit is engaged in an external call. Particularly, for units that were engaged in a three-way call prior to being placed in the hold state, the hold state signifies a state of waiting while the original three-way call is temporarily suspended until the three-way call is restored.

While units in the hold state cannot place a new call to an outside line, users of these units can perform other functions available on the unit, such as operations to edit various data entered in the unit or an internal call with another unit not engaged with an external call.

### (4) Process for Answering an Interrupting Call during a Three-way Call

Next, a three-way call control process executed by the base unit 10 during a three-way call and a handset control process executed by the handset 50 will be described with reference to Figs. 6-10. First, the three-way call control process will be described with reference to the flowchart in Fig. 6.

The process shown in Fig. 6 starts when a three-way call is initiated. After initiating the three-way call, the base unit 10 determines in S110 whether there are any incoming calls. The base unit 10 repeats the determination in S110 as long as there are no incoming calls. When the base unit 10 detects an incoming call (S110: YES), the base unit 10 executes various steps to handle the interrupting call. However, the particulars of the process vary depending on whether the base unit 10 itself is engaged in the three-way call.

If the base unit itself is involved in the three-way call (S120: YES), then in S130 the base unit 10 produces an interrupting call tone in the speaker of the handset 12 and displays a message indicating that there is an interrupting call (more specifically, the telephone number of the interrupting caller) on the display 13. In S140, the base unit 10 also transmits an interrupt notification command to the handset participating in the three-way call. Transmitting the interrupt notification command prompts the handset participating in the three-way call to produce an interrupting call tone and display the telephone number of the caller, as described above (see S1240 of Fig. 10 described later).

If the user of the base unit 10 presses the Call Waiting button 14e to answer the interrupting call (S150: YES), then in S160 the base unit 10 transmits an interruption response pulse to the telephone network 100 and in S170 transmits a hold command to all handsets. The hold command places all handsets 50 and 90 in a hold state (see S1340 of Fig. 10). Further, the external party participating the three-way call is also placed temporarily on hold so that a call can be achieved with the interrupting caller. Consequently, in S175 the cordless telephone set 1 shifts to a two-way call between the base unit 10 and the interrupting caller. Subsequently, the base unit 10 executes the process of S180 described later.

If the base unit 10 determines in S150 that the interruption response (operation of the Call Waiting button 14e) has not been performed on the base unit itself (S150: NO), then the base unit 10 advances to S200. The steps continuing from S200 will be described later.

If the two handsets are participating in a three-way call with an external party and the base unit is not involved in the three-way call when the interrupting call is received (S120: NO), then in S190 the base unit 10 transmits an interrupt notification command to each handset participating in the three-way call. In S200 the base unit 10 determines whether the base unit 10 has received a command from one of the handsets 50 and 90. If the base unit 10 has not received a command (S200: NO), then the base unit 10 returns to S110. However, if the base unit 10 has received a command from any of the handsets (S200: YES), then in S210 the base unit 10 determines whether the command is an interruption response command that is a command transmitted from a handset when the user of the handset presses the Call Waiting button 54e in response to the interrupting call.

If the received command is not an interruption response command (S210: NO), then in S280 the base unit 10 performs a process related to the received command and returns to S110. However, if the received command is the interruption response command (S210: YES), then in S220 the base unit 10 extracts handset data included in the command and in S225 transmits an interruption response pulse to the telephone line.

Next, if the base unit is also involved in the three-way call (the route from S150 to S200) (S230: YES), then in S240 the base unit 10 sets itself to a hold state and in S250 transmits a hold command to all handsets except the handset from which the interruption response command was transmitted. However, if the base unit 10 is not participating in the three-way call (S230: NO), then the base unit 10 skips to S250. In this way, handsets participating in the three-way call are disconnected from the outside line and placed in a hold state.

When the base unit 10 places itself in a hold state in S240, a message or mark indicating the hold state in which the user of the base unit 10 cannot call a new outside line to initiate a two-way call is displayed on the display 13. A similar message or mark indicating a hold state is displayed on the display 53 of each handset receiving a hold command in S250, that is, all handsets excluding the handset responding to the interrupting call (see S1350 of Fig. 10).

In S260 the base unit 10 sets the communication path between the handset that transmitted the interruption response command and the interrupting caller, and starts a two-way call. Subsequently, the base unit 10 executes the process of S270 described later.

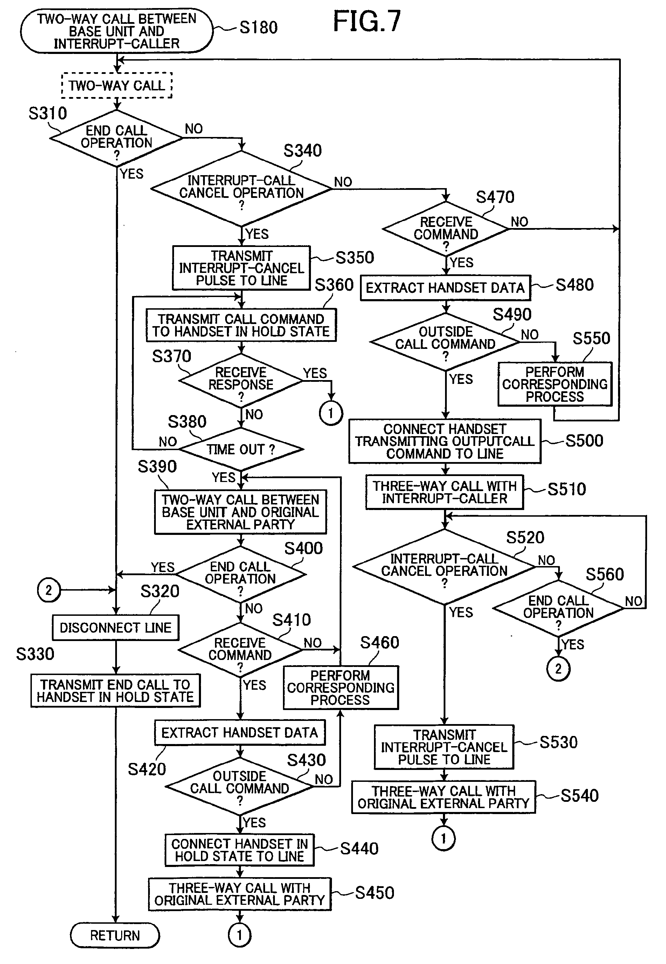

Next, the steps in the process of S180 for conducting a two-way call between the base unit and the interrupting caller will be described with reference to Fig. 7. This process is performed after the base unit 10 responds to an interrupting call during a three-way call and the cordless telephone set 1 shifts to a two-way call between the base unit 10 and the interrupting caller.

After the base unit 10 has shifted into a two-way call with the interrupting party, in S310 the base unit 10 determines whether the user of the base unit 10 has performed an end call operation. An end call operation is when the handset 12 of the base unit 10 is placed in an on-hook state.

If an end call operation has been performed on the base unit 10 (S310: YES), then in S320 the base unit 10 ends the current external call (the two-way call in this case) by disconnecting the line and in S330 transmits an end call command to all handsets currently in a hold state. This end call command functions to cancel the hold states of the handsets (see S1390 of Fig. 10). Consequently, the base unit 10 and all of the handsets 50 and 90 constituting the cordless telephone set 1 enter an incoming call standby state in which they are capable of placing new outside calls.

However, if an end call operation has not been performed on the base unit 10 involved in the two-way call (S310: NO), then in S340 the base unit 10 determines whether the user has pressed the Call Waiting button 14e to cancel the interrupting call. If the Call Waiting button 14e has not been operated (S340: NO), then in S470 the base unit 10 determines whether the base unit 10 has received a command from one of the handsets 50 and 90, and returns to S310 if no command has been received (S470: NO).

On the other hand, if the Call Waiting button 14e has been operated to end the call with the interrupting caller (S340: YES), then in S350 the base unit 10 transmits an interruption canceling pulse to the telephone line to disconnect the interrupting caller. Then, in S360 the base unit 10 transmits a call command to the handset shifted from the three-way call to a hold state.

In S370 the base unit 10 waits for an outside call command from the handset to which the call command was transmitted, that is, waits for the user of the handset to press the Outside Call button 54b. When the base unit 10 received an outside call command (S370: YES), the hold state is removed from the responding handset (see S1410-S1450 of Fig. 10), restoring the original three-way call (Fig. 6). If the base unit 10 has not received an outside call command during a prescribed time from the handset to which the call command was transmitted (S380: YES), then in S390 the base unit 10 is connected to the original external party in a two-way call.

If the user of the base unit 10 subsequently performs an end call operation (S400: YES), then the base unit 10 repeats the process from S320 described above. However, if an end call operation has not been performed (S400: NO), then in S410 the base unit 10 determines whether the base unit 10 has received a command from any of the handsets 50 and 90. If the base unit 10 has received a command (S410: YES), then in S420 the base unit 10 extracts the handset data included in the command and in S430 determines whether the command is an outside call command from the handset that was shifted from the three-way call to the hold state.

If the command is not an outside call command (S430: NO), then in S460 the base unit 10 performs an operation corresponding to the type of received command and returns to S390. If the command is an outside call command (S430: YES), then in S440 the base unit 10 sets the communication path to the handset that transmitted the outside call command. As a result, in S450 the cordless telephone set 1 shifts into the original three-way call including the handset that transmitted the outside call command, as well as the original external caller and the base unit 10. Here, the user of the handset shifted from the three-way call to the hold state transmits an outside call command by pressing the Outside Call button 54b (see S1370 of Fig. 10).

If the base unit 10 receives a command from one of the handsets 50 and 90 in S470 while the base unit 10 and the interrupting caller are engaged in a two-way call (S470: YES), then in S480 the base unit 10 extracts the handset data included in the command and in S490 determines whether the command is an outside call command. If the command is not an outside call command (S490: NO), then in S550 the base unit 10 performs a process corresponding to the type of received command and returns to S310. However, if the command is an outside call command (S490: YES), then in S500 the base unit 10 sets the communication path for the handset that transmitted the outside call command and in S510 shifts to a three-way call including this handset with the base unit 10 and the interrupting caller.

In S520 the base unit 10 determines whether the user of the base unit 10 has pressed the Call Waiting button 14e to cancel the interrupting call. If the Call Waiting button 14e has been operated (S520: YES), then in S530 the base unit 10 transmits an interruption canceling pulse to the telephone line and in S540 restores the three-way call with the original external party. However, if the Call Waiting button 14e has not been operated (S520: NO), then in S560 the base unit 10 determines whether the user of the base unit 10 has performed an end call operation and returns to S520 if the end call operation has not been performed. If the end call operation has been performed (S560: YES), then the base unit 10 proceeds to the process beginning from S320 described above to end the outside call.

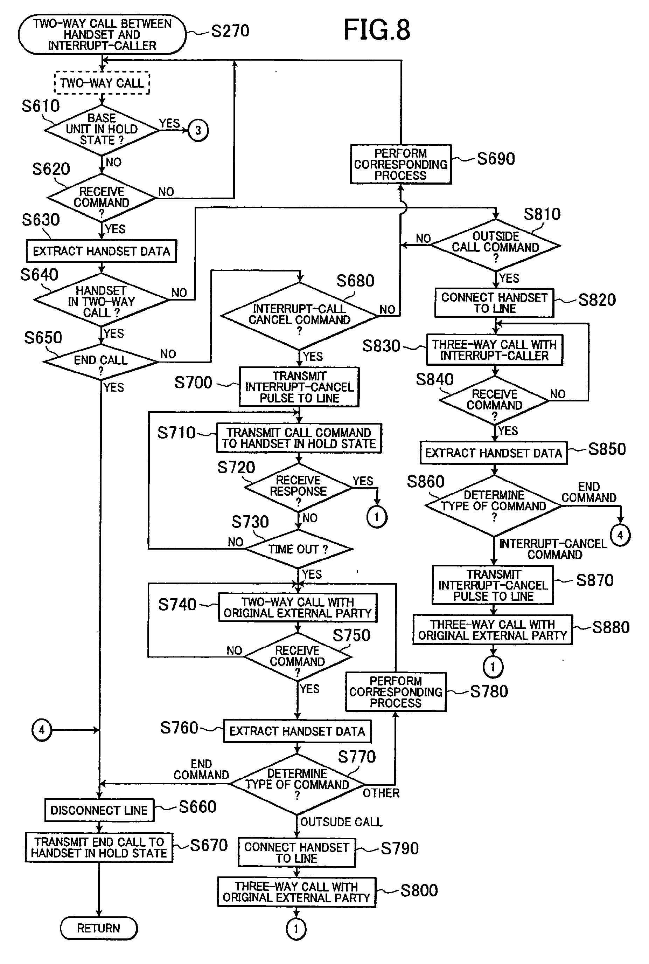

Next, steps in the process of S270 in Fig. 6 executed by the base unit 10 to implement a two-way call between a handset and the interrupting caller will be described with reference to Fig. 8. This two-way call process is performed after a handset involved in the three-way call responds to an interrupting call and the cordless telephone set 1 shifts to a two-way call between the handset and the interrupting caller.

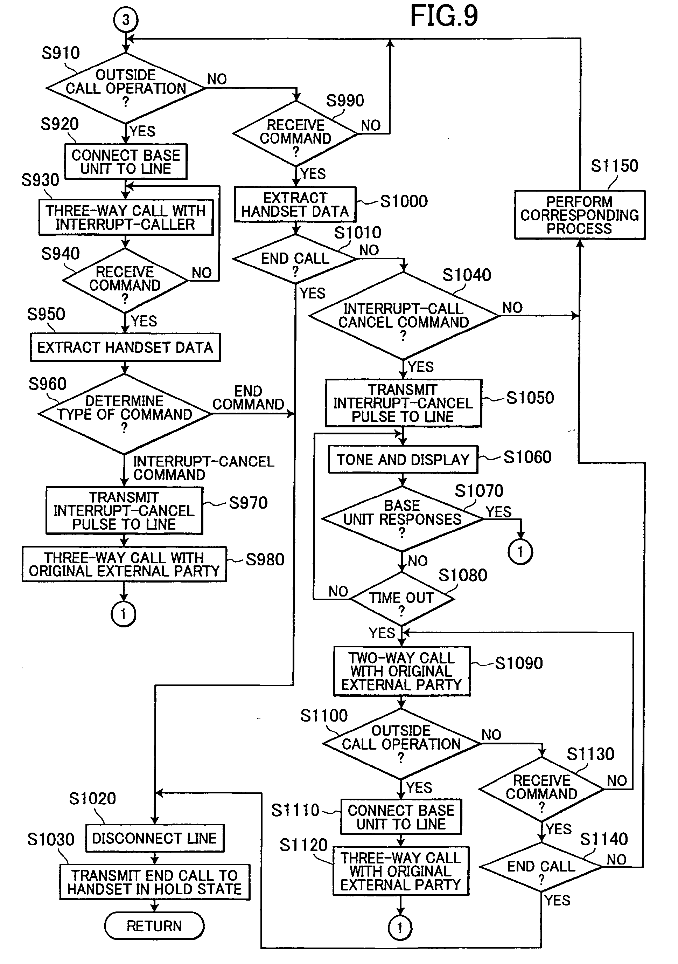

After the cordless telephone set 1 has shifted to a two-way call between a handset and the interrupting caller, in S610 the base unit 10 determines whether the base unit 10 itself has been placed in a hold state (route from S150 to S200). If so (S610: YES), then the base unit 10 proceeds to the process of Fig. 9 described later. However, if the base unit 10 was not participating in the three-way call (route from S120 to S190) (S610: NO), then in S620 the base unit 10 determines whether the base unit 10 has received a command from one of the handsets 50 and 90. The base unit 10 returns to S610 if the base unit 10 has not received a command (S620: NO). If the base unit 10 has received a command (S620: YES), then in S630 the base unit 10 extracts the handset data included in the command and in S640 determines whether the handset that transmitted the command is the handset involved in a two-way call with the interrupting caller.

If the base unit 10 received the command from the handset participating in the two-way call (S640: YES), then in S650 the base unit 10 determines whether the command is an end call command. The user of a handset participating in the two-way call transmits an end call command by pressing the Hang-up button 54c on the handset. If the command is an end call command (S650: YES), then in S660 the base unit 10 ends the two-way call with the outside line by disconnecting the line and in S670 transmits an end call command to all handsets in a hold state. This operation places the entire cordless telephone set 1 in an incoming call standby state in which a new call to an outside line can be placed.

However, if the command received from the handset participating in the two-way call is not an end call command (S650: NO), then in S680 the base unit 10 determines whether the command is an interrupting call canceling command. Here, the user of a handset participating in the two-way call transmits an interrupting call canceling command by pressing the Call Waiting button 54e (see S1310 of Fig. 10). If the command is not an interrupting call canceling command (S680: NO), then in S690 the base unit 10 executes a process corresponding to the type of received command and returns to S610.

However, if the command is an interrupting call canceling command (S680: YES), then in S700 the base unit 10 transmits an interruption canceling pulse to the telephone line and in S710 transmits a call command to the handset shifted from the three-way call to the hold state. In S720 the base unit 10 waits for an outside call command from the handset to which the call command was transmitted, that is, waits for the user of the handset to press the Outside Call button 54b. When the base unit 10 received an outside call command (S720: YES), the base unit 10 removes the hold state of the responding handset and restores the original three-way call.

However, if the base unit 10 has not received an outside call command during a prescribed time from the handset to which the call command was transmitted (S730: YES), then in S740 the base unit 10 connects the handset that had participated in the two-way call with the interrupting caller with the original external party in a two-way call.

In S750 the base unit 10 determines whether the base unit 10 has received a command from one of the handsets 50 and 90. If a command has been received (S750: YES), then in S760 the base unit 10 extracts the handset data included in the command and in S770 determines the type of command.

If the base unit 10 determines that the command is an end call command, that is, that the user of the handset participating in the two-way call has pressed the Hang-up button 54c, then the base unit 10 ends the external call through the process beginning in S660 described above. If the command is an outside call command received from the handset originally participating in the three-way call and currently in a hold state, in S790 the base unit 10 sets the communication path for this handset and in S800 shifts into the original three-way call. If the command is another command, then in S780 the base unit 10 performs a process corresponding to the type of received command and returns to S740.

However, if the base unit 10 determines in S640 that the command received while a two-way call is in progress between the handset and the interrupting caller is not a command from the handset participating in the two-way call (S640: NO), then in S810 the base unit 10 determines whether the call is an outside call command. If the call is not an outside call command (S810: NO), then in S690 the base unit 10 performs a process corresponding to the type of received command and returns to S610. However, if the command is an outside call command (S810: YES), then in S820 the base unit 10 sets the communication path to the handset that transmitted the outside call command and in S830 shifts the current two-way call to a three-way call including the handset that transmitted the outside call command.

If a command is subsequently received from one of the handsets 50 and 90 (S840: YES), then in S850 the base unit 10 extracts the handset data included in the command and in S860 determines the type of command. If the command is an end call command, then the base unit 10 ends the external call through the process beginning from S660 described above. If the command is an interrupting call canceling command, then in S870 the base unit 10 transmits an interruption canceling pulse to the telephone line and in S880 restores the three-way call with the original external party. If the command is another command, though not illustrated in the flowchart, the base unit 10 performs a process corresponding to this type of command.

Next, a process executed by the base unit 10 when the base unit 10 makes a YES determination in S610 of Fig. 8 will be described with reference to Fig. 9. Specifically, this process is performed when the cordless telephone set 1 has shifted to a two-way call between a handset and an interrupting caller from a three-way call in which the base unit 10 was participating.

In S910 of Fig. 9, the base unit 10 determines whether an outside call operation has been performed. While the base unit 10 is in a hold state, the outside call operation can be performed by lifting the handset 12 from the body of the base unit 10 to an off-hook state if the handset 12 was in the on-hook state or by pressing the Hold button 14d to cancel the hold state if the handset 12 is in an off-hook state.

If an outside call operation has been performed (S910: YES), then in S920 the base unit 10 sets the communication path for the base unit 10 itself and in S930 shifts into a three-way call with the interrupting caller. The process of S940-S980 is identical to that of S840-S880 of Fig. 8 described above and, hence, a description of this process will not be repeated here.

However, if an outside call operation has not been performed on the base unit 10 after shifting to the two-way call between the handset and the interrupting caller (S910: NO), then in S990 the base unit 10 determines whether the base unit 10 has received a command from one of the handsets. If the base unit 10 has not received a command (S990: NO), the base unit 10 returns to S910. If the base unit 10 has received a command (S990: YES), then in S1000 the base unit 10 extracts the handset data included in the command and in S1010 determines whether the command is an end call command.

When the command is an end call command (S1010: YES), then the base unit 10 disconnects the outside call in S1020 and transmits an end call command to all handsets in a hold state in S1030. However, if the command is not an end call command (S1010: NO), then in S1040 the base unit 10 determines whether the call is an interrupting call canceling command. If not (S1040: NO), then in S1150 the base unit 10 performs a process corresponding to the type of received command and returns to S910. If so (S1040: YES), then in S1050 the base unit 10 transmits an interruption canceling pulse to the telephone line and in S1060 notifies the user of the base unit 10 that the call with the interrupting caller has ended by issuing an interruption cancel call (outputting sounds through the speaker 23a or the like) and displaying a message on the display 13.

In S1070 the base unit 10 waits for the user of the base unit 10 to respond to this notification by performing the same outside call operation described in S910. If a response is received (S1070: YES), then the base unit 10 cancels its own hold state and restores the original three-way call. If a response is not received for a prescribed time (S1080: YES), then in S1090 the base unit 10 connects the handset that had been involved in the two-way call with the interrupting caller to the original external party in a two-way call.

In S1100 the base unit 10 determines whether an outside call operation has been performed on the base unit 10 itself. If so (S1100: YES), then in S1110 the base unit 10 sets its own communication path, establishing a connection with the outside line, and in S1120 shifts to the original three-way call. If an outside call operation has not been performed (S1100: NO), then in S1130 the base unit 10 determines whether the base unit 10 has received a command from a handset. If the base unit 10 has received a command (S1130: YES), then in S1140 the base unit 10 determines whether the command is an end call command. If the command is an end call command (S1140: YES), then the base unit 10 advances to S1020 and ends the outside call. However, if not an end call command (S1140: NO), then in S1150 the base unit 10 executes a process corresponding to the type of received command and returns to S910.

Next, a handset control process performed on each of the handsets 50 and 90 during an outside call will be described with reference to Fig. 10. The handset control process begins when an outside call is initiated. At the beginning of this process in S1200, the handset 50 (hereinafter the handset 50 will be used to represent any handset) determines whether a key operation has been performed. A key operation is detected when one of the operating buttons 54 (see Fig. 4) on the handset shown in Fig. 3 has been pressed. If there has been a key operation (S1200: YES), then in S1210 the handset 50 performs an operation corresponding to the operated key and returns to S1200. If a key operation has not been performed (S1200: NO), then in S1220 the handset 50 determines whether a command has been received from another unit.

If no command has been received (S1220: NO), the handset 50 returns to S1200. However, if a command is received (S1220: YES), then in S1230 the handset 50 determines whether the command is an interrupt notification command. As described earlier, the interrupt notification command is transmitted from the base unit 10 when an interrupting call is received during an outside call (see S140 and S190 of Fig. 6).

If the command is an interrupt notification command (S1230: YES), then in S1240 the handset 50 produces an interrupting call tone and displays a message on the display 53 to notify the user of the handset of the interrupting call. In S1250 the handset 50 determines whether the user of the handset has pressed the Call Waiting button 54e to answer the interrupting call. If the Call Waiting button 54e has been operated (S1250: YES), then in S1260 the handset 50 transmits an interruption response command to the base unit 10. As a result of transmitting this interruption response command, the base unit 10 performs the series of steps in S210-S260 of Fig. 6, and in S1270 the handset 50 enters a two-way call with the interrupting caller.

After entering the two-way call, in S1280 the handset 50 determines whether a key operation has been performed, as in the process of S1200 described above. If there is a key operation (S1280: YES), then in S1290 the handset 50 determines whether the Call Waiting button 54e has been operated to cancel the interrupting call. If the Call Waiting button 54e has not been operated (S1290: NO), then in S1300 the handset 50 performs a process corresponding to the operated key and returns to S1200. However, if the Call Waiting button 54e has been operated (S1290: YES), then in S1310 the handset 50 transmits an interrupting call canceling command to the base unit 10. As a result, the base unit 10 transmits the interruption canceling pulse to the telephone line, and the handset 50 returns to the three-way call with the original external party in S1320.

However, if the command received during the external call is not an interrupt notification command (S1230: NO), then in S1330 the handset 50 determines whether the command is a hold command. The hold command is a command transmitted from the base unit 10 when the base unit 10 or one of the handsets 50 and 90 participating in the three-way call responds to the interrupting call (see S170 and S250 of Fig. 6).

If the command is not a hold command (S1330: NO), then in S1440 the handset 50 performs a process corresponding to the type of received command and returns to S1200. However, if the command is a hold command (S1330: YES), then in S1340 the handset 50 sets itself to a hold state and in S1350 displays a message indicating this state on the display 53. For handsets not participating in an outside call, it is possible to issue a sound through the speaker unit 67 in place of (or in addition to) the message displayed on the display 53.

In S1360 the handset 50 determines whether a command has been received. If no command has been received (S1360: NO), then the handset 50 determines in S1370 whether the Outside Call button 54b has been pressed. If the Outside Call button 54b has been pressed (S1370: YES), then in S1450 the handset 50 cancels the hold state and returns to S1200. When the user presses the Outside Call button 54b, the handset 50 transmits an outside call command to the base unit 10 causing the base unit 10 to set the communication path of the handset 50 to the outside line, thereby enabling the handset to participate in the outside call with the interrupting caller.

However, if a command is received after shifting into the hold state in S1340 (S1360: YES), then in S1380 the handset 50 determines the type of command. If the command is an end call command received from the base unit 10, in S1390 the handset 50 clears the hold display on the display 53 and cancels the hold state. As a result, all outside calls on the cordless telephone set 1 are ended and in S1400 the handset 50 shifts to an incoming call standby state in which a new outside call may be placed.

If the received command is a call command, then in S1410 the handset 50 sounds a ringtone in the speaker unit 67 and displays a message on the display 53, prompting the user to disconnect from the interrupting caller (in other words, to return to the original three-way call). If the user presses the Outside Call button 54b at this time (S1420: YES), then in S1450 the handset 50 removes the hold state and returns to the three-way call. However, if the call command from the base unit 10 ceases (S1430: NO) before the Outside Call button 54b has been operated, then the handset 50 returns to S1350 and maintains the hold state.

Further, while in the hold state, handsets not participating in an outside call can communicate with each other. Specifically, if the user of the first handset 50 wishes to call the second handset 90 on an internal call, the user of the handset 50 presses the Hold button 54d and enters the extension number of the second handset 90 using the dialing buttons 54a. When the handset 50 subsequently displays a prescribed message, such as "Waiting", the user presses the Call Waiting button 54e to speak to the second handset 90. The user of the second handset 90 can also speak to the first handset 50 by pressing the Call Waiting button 54e.

### (5) Effects of the Embodiment

In the cordless telephone set 1 of the preferred embodiment described above, if a three-way call is in progress when an interrupting call is received, only the unit that responds to the interrupting call (the base unit 10 or one of the handsets 50 and 90) is connected to the interrupting caller. Accordingly, the interrupting caller is not placed in an uncomfortable situation by being suddenly connected to a plurality of parties (such as being inserted into a three-way call), as in the prior art.

When one of the units participating in the three-way call responds to the interrupting call, the units that did not respond are placed in a hold state. At this time, units in a hold state can perform other functions and operations other than initiating a new call to an outside line. Further, by pressing the Outside Call button 54b (in the case of the handset) or taking the handset 12 off hook or the like (in the case of the base unit 10), units in a hold state can also participate in the call with the interrupting caller.

Hence, the present invention can provided a user-friendly cordless telephone set that initially connects only the unit responding to an interrupting call to the interrupting caller in a two-way call when an interrupting call is received. However, the cordless telephone set allows other units subsequently to participate in the two-way call with the interrupting caller according to the situation (for example, if the interrupting caller expresses a desire or gives permission to talk with another user).

Further, after shifting to a two-way call with the interrupting caller, a message indicating the two-way call (hold message) is displayed on the display 13 (53) of the other units. Hence, by viewing the display 13 (53), users of units not participating in the two-way call can easily tell that they are in a hold state (in other words, someone is occupying the outside line).

Further, rather than immediately restoring the three-way call after disconnecting from the interrupting caller, the cordless telephone set 1 first prompts units that were shifted from the three-way call to a hold state to return to the three-way call. When the user of the unit in the hold state performs an operation to return to the three-way call in response, the cordless telephone set 1 connects the unit to the original external party. Accordingly, a user participating in a three-way call that is placed in a hold state can perform other work without worrying, while another user is engaged in a two-way call with the interrupting caller. When the two-way call has ended, the base unit 10 calls the user in the hold state so that the original three-way call can be immediately restored.

Further, the base unit 10 and the handset 50 are respectively provided with the display 13 and the display 53 for displaying the telephone number of the interrupting caller. This construction can identify the interrupting caller when an interrupting call is received during a multiparty call. Accordingly, users of the base unit 10 and handsets 50 participating in the multiparty call can easily determine which user should respond to the interrupting call, thereby reliably ensuring that the appropriate user answers the incoming call.

### (6) Variations of the Embodiment

While the invention has been described in detail with reference to specific embodiments thereof, it would be apparent to those skilled in the art that many modifications and variations may be made therein without departing from the spirit of the invention, the scope of which is defined by the attached claims.

For example, in the preferred embodiment described above, the cordless telephone set 1 is capable of performing a three-way call. However, the present invention can be applied to a cordless telephone set capable of performing a call with four parties or more, with one being an external party, and can perform the same processes on this telephone set as described in the embodiment.

Further, in the embodiment described above, the base unit 10 issues a call command to units that had been participating in a three-way call and that were subsequently placed in a hold state due to an interrupting call when the two-way call with the interrupting caller ends and the call with the original external party is being restored, and the units respond to this call command to return to the original three-way call. However, it is also possible to forcibly restore the original three-way call when the interrupting caller is disconnected if the users of the units not talking to the interrupting caller continue to hold their handsets while waiting for the call with the interrupting caller to end.

With this configuration, users placed in the hold state can be returned to the original three-way call without delay as soon as the interrupting caller is disconnected, thereby enabling an appropriate connection status conforming to the user's status and desire.

Further, the preferred embodiment described above assumes that the external party of the original three-way call is placed on hold when the cordless telephone set 1 shifts to a two-way call with an interrupting caller and waits until the conversation with the interrupting caller ends. However, it is conceivable that the external party participating in the original three-way call may end the call when or after the cordless telephone set 1 shifts the three-way call to a call with the interrupting caller. In other words, it is not always necessary to restore the call with the original external party after completing the call with the interrupting caller.

Therefore, after an interrupt call has ended and the call waiting button pressed, the base unit 10 transmits an interruption canceling pulse to the telephone line and subsequently determines the connection state with the outside line. If the call with the original external party has already been disconnected (if the switchboard 105 is not in a hold state), then the cordless telephone set 1 may disconnect the line to end the call and transmit an end call command to all units on hold.

Further, the preferred embodiment describes the case of the telephone network 100, which is a common analog public switched network, as the line between the cordless telephone set 1 and external parties. However, the present invention is not limited to the telephone network 100 but may be applied to other lines capable of achieving voice calls, such as an ISDN network, an optical fiber network, and an Internet telephone network.

In the embodiment, if the handset 50 is set to a hold state, the display 53 displays a message indicating the hold state. However, the display 13 in the base unit 10 may display the message. Hence, if the handset 50 replies to an interrupting call while the base unit 10 is involved in the multiparty call, the base unit 10 places itself in the standby state and notifies the user of the base unit 10 of this status.

## Claims

1. A cordless telephone system comprising:
a base unit having a first handset, the base unit being connectable to an outside line;
a second handset connectable to the outside line via the base unit, a first multiple-party call being implemented between a first caller on the first handset, a second caller on the second handset, and an external caller on the outside line, a second multiple-party call being implemented between the first caller, the second caller, and an interrupting caller on the outside line;
an interruption informing unit configured to output an informing signal to both the first caller and the second caller when the base unit receives an interrupting signal from the outside line, the interrupting signal indicating that the interrupting caller calls the base unit during the first multiple-party call;
an interruption replying unit configured to output a first replying signal in response to a first caller's instruction produced in response to the informing signal, and output a second replying signal in response to a second caller's instruction produced in response to the informing signal; and
a switching unit configured to disconnect the second handset from the outside line, resulting in implementation of a first two-way call between the first caller and the interrupting caller if the first replying signal is outputted earlier than the second replying signal, and disconnect the first handset from the outside line, resulting in implementation of a second two-way call between the second caller and the interrupting caller if the second replying signal is outputted earlier than the first replying signal.

2. The cordless telephone system according to claim 1, further comprising a disconnecting state informing unit that informs the first caller and the second caller of disconnection of one of the first and second handsets from the outside line.

3. The cordless telephone system according to claim 1 or 2, wherein the second handset is configured to accept a command and capable of achieving an operation corresponding to the command other than calling the outside line during the first two-way call, and the first handset is configured to accept a command and capable of achieving an operation corresponding to the command applied to the first handset other than calling the outside line during the second two-way call.

4. The cordless telephone system according to claim 3, further comprising a third handset connectable to the outside line via the base unit, wherein the operations achieved by the first and second handsets include an internal call between the first handset and the third handset or between the second handset and the third handset.

5. The cordless telephone system according to any of claims 1 to 4, further comprising:
a call participating unit configured to allow the second caller to participate in the first two-way call and to allow the first caller to participate in the second two-way call, wherein the switching unit connects the second handset with the outside line when the second caller is allowed to participate in the first two-way call, resulting in implementation of the second multiple-party call, and connects the first handset with the outside line when the first caller is allowed to participate in the second two-way call, resulting in implementation of the first multiple-party call.

6. The cordless telephone system according to claim 5, wherein the call participating unit comprises a first call participating unit configured to allow the second caller to participate in the first two-way call and a second call participating unit configured to allow the second caller to participate in the first two-way call, the first call participating unit being provided in the second handset, the second call participating unit being provided in the first handset.

7. The cordless telephone system according to claim 5 or 6, further comprising a two-way call end notifying unit configured to notify the second caller that the first two-way call will end and to notify the first caller that the second two-way call will end.

8. The cordless telephone system according to any of claims 1 to 7, further comprising a quit controlling unit configured to output a first quitting signal for quitting the first two-way call and a second quitting signal for quitting the second two-way call, wherein the switching unit disconnects the first handset from the outside line in response to the first quitting signal, and disconnects the second handset from the outside line in response to the second quitting signal.

9. The cordless telephone system according to any of claims 1 to 8, further comprising displaying unit configured to display information about interrupting caller.

10. The cordless telephone system according to any of claims 1 to 9, further comprising a third handset connectable to the outside line via the base unit.

11. The cordless telephone system according to claim 10, wherein the first multiple-party call is implemented between the first caller, a third caller on the third handset, and the external caller, and the second multiple-party call is implemented between the first caller, the third caller, and the interrupting caller.

12. The cordless telephone system according to any of claims 1 to 11, wherein the second handset communicates with the first handset wirelessly.

13. The cordless telephone system according to claim 11, wherein the third handset communicates with the first handset wirelessly.

14. A method of connecting a cordless telephone system with an interrupting caller on an outside line during a multiple-party call, the cordless telephone system including a base unit having a first handset and connectable to the outside line, and a second handset connectable to the outside line via the base unit, a first multiple-party call being implemented between a first caller on the base unit and a second caller on the second hand set and an external caller on the outside line, a second multiple-party call being implemented between the first caller and the second caller and the interrupting caller, the method comprising:
outputting an informing signal to both the first caller and the second caller when the base unit receives an interrupting signal from the outside line, the interrupting signal indicating that the interrupting caller calls the base unit during the first multiple-party call;
outputting a first replying signal in response to a first caller's instruction produced in response to the informing signal, and output a second replying signal in response to a second caller's instruction produced in response to the informing signal; and
disconnecting the second handset from the outside line, resulting in implementation of a first two-way call between the first caller and the interrupting caller if the first replying signal is outputted earlier than the second replying signal, and disconnecting the first handset from the outside line, resulting in implementation of a second two-way call between the second handset and the interrupting caller if the second replying signal is outputted earlier than the first replying signal.

15. The method according to claim 14, further comprising informing the first caller and the second caller of disconnection of one of the first and second handsets from the outside line.

16. The method according to claim 14 or 15, further comprising:
allowing the second caller to participate in the first two-way call and allowing the first caller to participate in the second two-way call; and
connecting the second handset with the outside line when the second caller is allowed to participate in the first two-way call, resulting in implementation of the second multiple-party call, and connecting the first handset with the outside line when the first caller is allowed to participate in the second two-way call, resulting in implementation of the first multiple-party call.

17. The method according to claim 16, further comprising notifying the second caller that the first two-way call will end and notifying the first caller that the second two-way call will end.

18. The method according to any of claims 14 to 17, further comprising:
outputting a first quitting signal for quitting the first two-way call and a second quitting signal for quitting the second two-way call; and
disconnecting the first handset from the outside line in response to the first quitting signal, and disconnecting the second handset from the outside line in response to the second quitting signal.
